# EUROPEAN PATENT APPLICATION

(11) **EP 1 939 789 A1**
(43) Date of publication of application: **02.07.2008**
(21) Application number: 06425880.9
(22) Date of filing: 29.12.2006
(51) Int. Cl.: G06K 9/22, G06K 7/14

(54) **Scanning process for optical reading strips and apparatus for carrying out such process**

(71) Applicant: Italdata Ingegneria Dell'Idea S.p.A., 00128 Roma (IT)
(72) Inventor: Boccacci, R. c/o ITALDATA-Ingeneria dell'idea SpA, 00128 Roma (IT)
(74) Representative: Leone, Mario

(57) **Abstract**

In a scanning process for optical reading strips (3), for instance according to the ICAO-MRTD standard, a precise reading is performed at the same time without requiring a complex scanning procedure through the steps of: scanning a plurality of distinct images (F) of the optical reading strip (3), so as they cover in overlapping an effective surface of the optical reading strip (3); performing an optical character recognition (OCR) for each of the images of said plurality, obtaining, for each of them, a set of characters (T); identifying, for each of said sets of characters (T), said index characters (Y); and identifying, in said sets of characters (T), those characters (F) which are present in more than one set of characters (T), performing accordingly a correct positioning of all the characters of said sets according to said positioning pattern.

## Description

The present invention relates to a scanning process for optical reading strips, and to a kit suitable for carrying out such process.

Processes intended for the optical reading of the strip usually provided with in identity documents such as machine readable passports (MRP), identity cards, cards and badges of other kind and the like are known, for translating into digital data those pieces of information which are stored by means of code printing, generally but not necessarily of alphanumeric kind.

This kind of process involves a digital scanning of the strip, producing a digital image thereof, and then an optical character recognition process (OCR), allowing to obtain, without interruptions, the digital translation of the printed codes.

This solution, although it appear particularly simple, is greatly influenced by the conditions with which the scanning of the whole strip is carried out, whose quality is critical for the final result.

Often, the scanning has to be carried out quickly and by portable devices, and the resulting optical image could not have a sufficient quality for the recognition of the whole strip, in particular when the latter contains complex characters and not only a bar code.

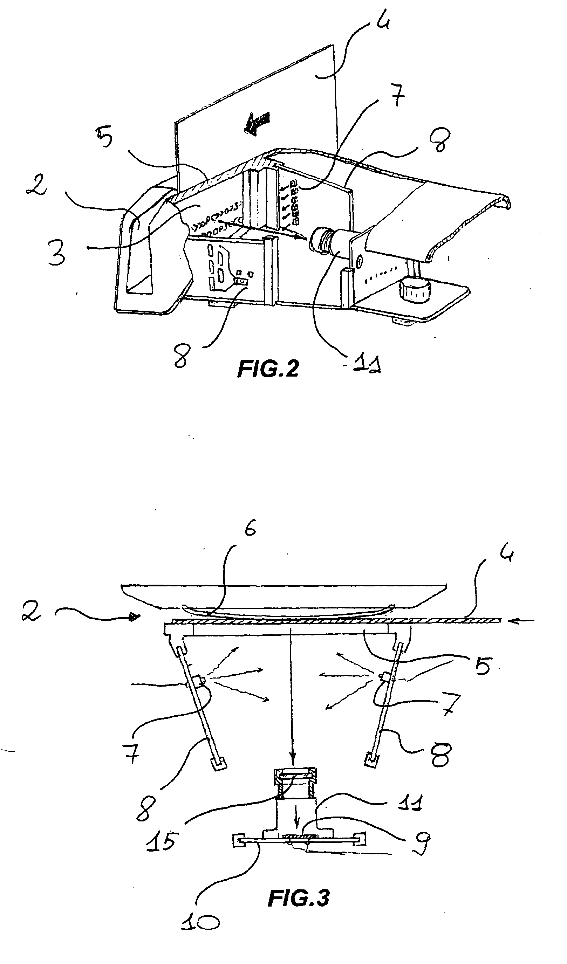

An example of optical reading strip of a MRP-kind passport is depicted in figure 3 of the annexed drawings.

The technical problem underlying the present invention is to provide a scanning and character recognition process allowing to overcome the drawback mentioned with reference to the prior art.

Such a problem is solved by a process as above specified, wherein the optical reading strip is composed by a known number of characters arranged according to a know positioning pattern comprising positioning index characters, comprising the steps of:
* scanning a plurality of distinct images of the optical reading strip, so as they cover in overlapping an effective surface of the optical reading strip;
* performing an optical character recognition for each of the images of said plurality, obtaining, for each of them, a set of characters;
* identifying, for each of said sets of characters, said index characters; and
* identifying, in said sets of characters, those characters which are present in more than one set, performing accordingly a correct positioning of all the characters of said sets according to said positioning pattern.

The above mentioned problem is likewise solved, according to the same inventive concept, by a kit for scanning optical reading strips wherein the optical reading strip is composed by a known number of characters arranged according to a know positioning pattern comprising positioning index characters, comprising:
* a reading device having:
   o positioning means for said optical reading strip;
   o lighting means for said optical reading strip;
   o an optical digital sensor apt to produce a plurality of digital images over said optical reading strip,
* a computer, connectable to said reading device, having:
   o an optical character recognition software through which an optical character recognition for each image of said plurality is performed, thus obtaining, for each of them, a set of characters; and
   o a software for identifying, in each set of characters, said index character, and for identifying, in said sets of characters, those characters which are present in more than one set, performing accordingly a correct positioning of all the characters of said sets according to said positioning pattern.

The main advantage of the process and of the scanning kit according to the present invention lies in allowing a precise reading at the same time without requiring a complex or particularly exact scanning procedure.

The present invention will be described hereinafter according to a preferred embodiment thereof, given to an illustrative and non limitative purpose with reference to the annexed drawings wherein:

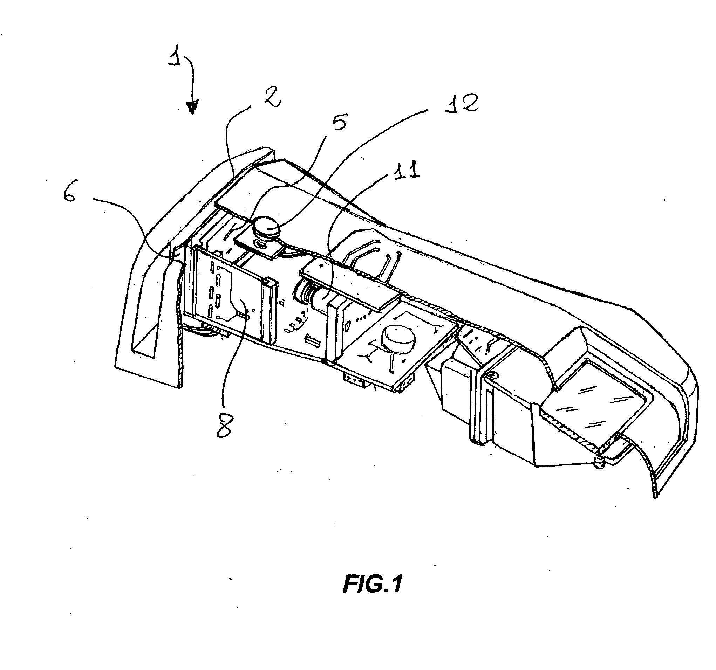

* figure 1 shows a perspective and partially sectioned view of a reading device of a kit according to the invention;
* figure 2 shows a perspective and partially sectioned view of a magnified details of the device of figure 1;
* figure 3 shows a schematic and sectioned view according to a horizontal median plane of the details of figure 2;
* figure 4 schematically depicts the process according to the present invention; and
* figure 5 depicts the kit according to the invention.

With reference to drawings 1 to 3 and 5, a reading device is hereinafter described which can be utilized for the execution of the process which will be detailed in the following.

Such a device, indicated by 1 as a whole, has a body of reduced size and substantially hand-grippable. It has a slot 2 for the introduction of an optical reading strip 3 (figure 2), e.g. defined on the page 4 of a passport, an identity card or the like.

The slot 2 is open at three sides thereof, the fourth one constituting the bottom thereof, so as to allow the longitudinal sliding of the page 4. Inside the slot 2 means for pressing the strip 3 on a transparent screen 5 are present, the screen 5 embodying an internal surface of the slot 2. In the present embodiment, said pressing means have an elastic leaf 6 acting as spring and arranged in such a way that the passage of the strip 3 occurs between the leaf 6 and the screen 5 (figure 3).

The slot 2 and the leaf 6 embody, in an assembly, positioning means of the optical reading strip 3. However, it is intended that the slot is only one of the possible embodiment for defining such positioning means. Nevertheless, the opportunity of having the strip 3 sliding with respect to the screen 5, through which the reading occurs, is considered a preferred feature of the present invention.

At the back of the screen 5 the reading device 1 comprises lighting means of said optical reading strip 3, in the present embodiment embodied by a set of LEDs 7 laterally arranged with respect to the screen 5, mounted on a card 8 electrically supplied in a conventional manner.

Preferably, said LEDs are of IRLED-kind LEDs, i.e. infrared radiation emitter.

The device 1 also comprises a digital optical sensor 9, for instance of CCD or CMOS type, suitable for producing a plurality of digital images over said optical reading strip.

Such a sensor 9 is mounted on a card 10 and it is positioned inside a case 11 open toward the screen 5, housing focusing lenses and an infrared bandwidth filter 15, so as to exclude different wavelengths in the field of the visible light or below, for instance lower than 700 nm.

The sensor 9 and possibly the lighting means are activated by the passage of the optical strip 3. An activation button 12 can be provided.

The device 1 can be connected to a computer, a laptop computer 13 in the present embodiment, through a connection of any kind, wireless or through a connection cable 14, for instance with a USB or Firewire^{®} socket.

The above described kit can perform the process according to the invention, for the reading of optical reading strips which are for instance present in identity documents such as passports.

In the identity documents, such a strip is placed in a region where some pieces of information, written in a textual format in other regions, are written as alphanumeric character strings, printed so as to be suitable for the optical character recognition, i.e. so as to be read by a machine.

For example, this expedient allows the customer officer and other police agents to quickly examine these passports, without the needing of manually inserting data in a computer system, to check in a database if the passport has been stolen, if the holder is wanted or for recording the transfer of foreign people.

The optical reading strip can comprise a known number of characters placed according to a known positioning pattern comprising positioning indexes Y.

For example, a standard of such a kind is defined within the ICAO-MRTD program.

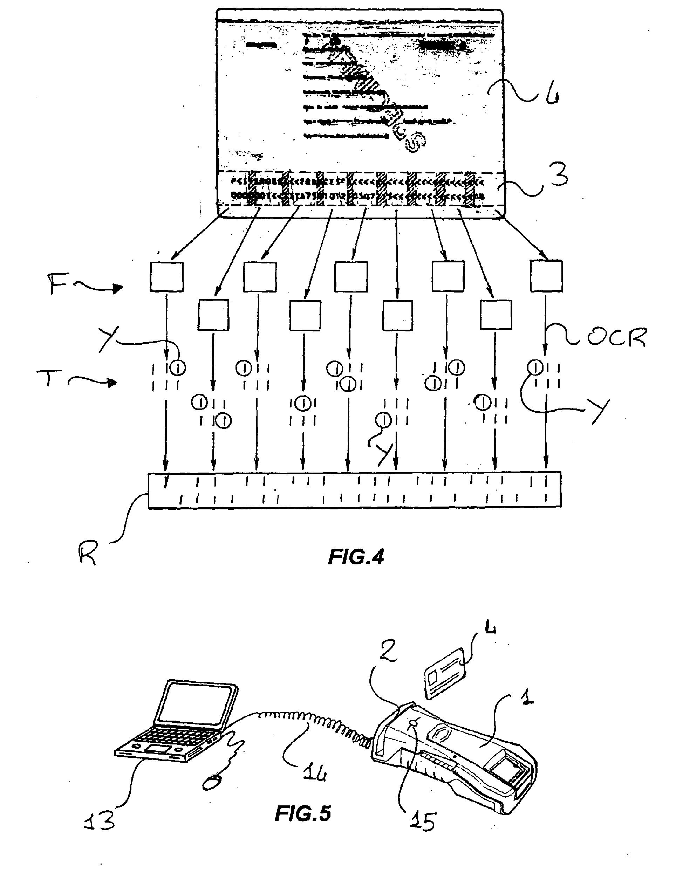

With particular reference to figure 4, in the following the process of the present embodiment will be described. It comprises a step wherein a plurality of distinct images are scanned from the optical reading strip 3, operating the device 1 and making the strip 3 pass through the slot 2.

The number of images will depend upon the speed with which the strip 3 is passed through the slot 2, i.e. in front of the screen 5 and of the sensor 9. The latter will be operated according to a predetermined detection clock frequency, selected so ad to shoot a number of images which, even at the maximum sliding speed allowed or conceivable, is such as the images themselves, overlapping one on each other, cover an effective surface of the optical reading strip.

All the images, indicated as F, in a digital format, are sent to the computer 13 for the processing thereof.

The computer 13 includes a software for the optical character recognition (OCR), according to any standard.

Through this software, an optical character recognition is performed for each image of said plurality, obtaining, for each of them, a set of characters T.

A further software in the computer 13 will perform an identification step, for each set of characters T, of said index characters Y.

At this point, in a subsequent step said index characters Y are utilised for identifying, in said set of characters T, those characters which are present in more than one set T.

In such a way, it is possible to exclude the redundant characters, consequently carrying out a correct positioning of all the characters of said sets according said positioning patterns, obtaining a reading R of the optical reading strip 3.

Then, this reading can be used according to the intended tasks by virtue of its presence in the examined document.

Therefore, it is understood that the reading will result independently upon the sliding speed in front of the CCD sensor in the reading device.

The latter has a simplified structure and it can be easily handled, worn and so on, being sufficient to connect it to a computer for its operation. The computer also will be of a portable kind, provided with the required data storage for storing more sets of images to be treated. It can be connected, also remotely, to databases to be looked up to compare the resulting data.

To the above process and kit for reading a man skilled in the art, to comply with further and contingent requirements, will adopt several further variations and modifications, in any case all falling within the protection scope of the present invention, as defined by the annexed claims.

## Claims

1. Scanning process for optical reading strips, wherein the optical reading strip (3) is composed by a known number of characters arranged according to a know positioning pattern comprising positioning index characters (Y), comprising the steps of:
* scanning a plurality of distinct images (F) of the optical reading strip (3), so as they cover in overlapping an effective surface of the optical reading strip (3);
* performing an optical character recognition (OCR) for each of the images of said plurality, obtaining, for each of them, a set of characters (T);
* identifying, for each of said sets of characters (T), said index characters (Y); and
* identifying, in said sets of characters (T), those characters (F) which are present in more than one set of characters (T), performing accordingly a correct positioning of all the characters of said sets according to said positioning pattern.

2. Process according to claim 1, wherein said optical reading strip (3) meets the ICAO-MRTD standard.

3. Process according to claim 1, wherein the scanning is carried out having the optical reading strip (3) sliding with respect to an optical sensor (9)

4. Process according to claim 3, wherein the sensor (9) is operated according to a predetermined detection clock frequency, selected so ad to shoot a number of images such that, even at the maximum sliding speed allowed, in overlapping, cover an effective surface of the optical reading strip (3).

5. Kit for scanning optical reading strips wherein the optical reading strip (3) is composed by a known number of characters arranged according to a know positioning pattern comprising positioning index characters (Y), comprising:
* a reading device (1) having:
o positioning means (2, 6) for said optical reading strip (3);
o lighting means (7) for said optical reading strip (3);
o an optical digital sensor (9) apt to produce a plurality of digital images (F) over said optical reading strip (3),
* a computer (13), connectable to said reading device (1), having:
o an optical character recognition software through which an optical character recognition for each image (F) of said plurality is performed, thus obtaining, for each of them, a set of characters (T); and
o a software for identifying, in each set of characters (T), said index characters (Y), and for identifying, in said sets of characters (T), those characters which are present in more than one set, performing accordingly a correct positioning of all the characters of said sets according to said positioning pattern.

6. Kit according to claim 5, wherein said positioning means comprise a slot (2).

7. Kit according to claim 6, wherein said slot (2) is open at three sides thereof, the fourth one constituting the bottom thereof, so as to allow the longitudinal sliding of the optical reading strip (3).

8. Kit according to claim 6, wherein the positioning means comprise, inside the slot (2), means for pressing (6) said optical reading strip (3) on a transparent screen (5) embodying an internal surface of the slot (2).

9. according to claim 8, wherein the means for pressing have an elastic leaf (6) acting as a spring and arranged in such a way that the passage of the strip (3) occurs between the leaf (6) and the transparent screen (5).

10. Kit according to claim 5, wherein the lighting means of said optical reading strip (3) comprise LEDs (7), laterally arranged with respect to the screen (5) against which said optical reading strip (3) is placed.

11. Kit according to claim 10, wherein said LEDs (7) are of IRLED-kind LEDs.

12. Kit according to claim 5, wherein said digital optical sensor (9) is of CCD type.

13. Kit according to claim 11, wherein said digital optical sensor (9) is provided with an infrared bandwidth filter (15).

14. Kit according to claim 5, wherein the reading device (1) can be connected to the computer (13) through a wireless connection or through a connection cable (14).
